# EUROPEAN PATENT APPLICATION

(11) **EP 4 167 414 A1**
(43) Date of publication of application: **19.04.2023**
(21) Application number: 21398016.2
(22) Date of filing: 15.10.2021
(51) Int. Cl.: H02H 3/06, H02H 3/247

(54) **CIRCUITS FOR RESETTING SMART METER AND METHODS THEREOF**

(71) Applicant: Open Spiral Investments, SGPS, S.A., 1495-764 Algés (PT)
(72) Inventor: dos Santos Martins, Paulo Jorge Tenreiro, 1495-764 Algés (PT)
(74) Representative: Vossius & Partner Patentanwälte Rechtsanwälte mbB

(57) **Abstract**

A resetting device (104) is disclosed. The resetting device comprises a switch module (118), comprising at least one first end (115) and at least one second end (116), wherein the at least one first end is configured to couple to a power grid (111), and a detecting module (110), configured to obtain information about a first event from at least one first end and to control the switch module to decouple at least one connection between each of the at least one first end and each of the at least one second end based on the obtained information, and couple the at least one connection based on a second event associated with the first event.

Fig. 1

## Description

The present disclosure relates to circuits for a smart meter and methods thereof, and particularly to circuits for resetting/rearming a smart meter and methods thereof.

In recent years, a general trend related to electric energy metering is replacing traditional electromechanical meters with microprocessor based smart meters. Several new features of the smart meters are introduced, mostly to allow consumption data to be read remotely. To achieve this goal, the smart meters include some forms of communication function with a central system. The communication function creates an opportunity for electricity distribution companies to reduce operational costs by implementing additional features on or in the smart meters. For example, remote observation of instant values of current and power are possible by using the smart meters. Therefore, one feature which may be added in the smart meters is a maximum current/power limit disconnect function. This function disconnects the customer electrical system from the grid if a current (or power) value exceeds a pre-established limit. The ability of remotely changing the limit is a convenient feature for the electric network operator because physical visits to the customer premises for setting the limit can be avoided.

Traditionally, the electrical network operators implement at (or very close to) the customer installation a number of mandatory functions, some of which are required by regulations or utilized to protect the electricity distribution infrastructure. Usually, the electrical connection to the consumer installation is limited by a heavy-duty thermal melt down fuse system (mostly for protection of the upstream devices for heavy overload and to be a failsafe mechanism) followed by a traditional energy meter. Both these devices are usually placed close to the real estate entry point and (in some countries by regulations) accessible from a public area to allow reading and maintenance without requiring customer assistance for access. Inside the customer premises, two types of functions may be implemented in an accessible place for the customer:
- a current or power limiter, that trips if a pre-established value is passed, and
- an earth return detection or differential protection for human safety purposes that trips if an earth return current is detected over a certain limit.

In some cases, both functions are implemented by a single device. Tripping of any of these disconnects the customer electrical network from the grid supply and thus no power is available at the customer network. Both systems if tripped require human intervention to rearm/reset them and reestablish the power supply.

Mobile network operators as well as other industries operate remote sites where no human presence is existent. Under such a condition, when an electrical protection system trips and removes the power, a travel to the site is required to rearm the device, resulting in additional cost. In a worst case scenario, it may not be possible to reach the remote sites in time before the backup battery systems being fully discharged.

Therefore, how to reset/rearm the devices without on-site visiting becomes an important topic to be discussed.

The present disclosure relates to a resetting device. The resetting device comprises:
a switch module, comprising at least one first end and at least one second end, wherein the at least one first end is configured to couple to a power grid, and
a detecting module, configured to obtain information about a first event from at least one first end and to control the switch module to:
   decouple at least one connection between each of the at least one first end and each of the at least one second end based on the obtained information, and
   couple the at least one connection based on a second event associated with the first event.

Various embodiments may preferably implement the following features:
Preferably, obtaining the information about the first event from the at least one first end comprises detecting the first event at the at least one first end.

Preferably, the first event comprises an interrupted power supply at the at least one first end or a supply voltage determined based on the at least one voltage being smaller than a first threshold voltage.

Preferably, the second event comprises at least one of the following: the first event ends, a power supplied to the at least one first end or a supply voltage being greater than a second threshold voltage.

Preferably, the detecting module is configured to provide an impedance to the at least one first end when the switch module decouples the at least one connection. Preferably, the impedance is configured such that a load of the detecting module is undetectable from the at least one first end.

Preferably, the at least one first end is configured to couple to the power grid via at least one of a metering module or a protection switch.

Preferably, the at least one second end is configured to couple to at least one of a distribution device or at least one load.

Preferably, the detecting module comprises:
a coil configured to control the switch module, wherein the coil comprises a first coil end coupled to the first end coupled to a natural line of the power grid and a second coil end, and
a current switch unit configured to be coupled between the first end coupled to a phase line of the power grid and the second coil end.

Preferably, the current switch unit is an alternating current switch unit or a direct current switch unit.

Preferably, the current switch unit comprises:
a first current switch, coupled between the first end coupled to the phase line and the second coil end, and
a second current switch, coupled between the first end coupled to the first current switch and a control gate of the first current switch.

Preferably, the first current switch and the second current switch are alternating current switches or direct current switches.

Preferably, a resistor is coupled between the first end coupled to the first current switch and the second current switch.

Preferably, the resetting device further comprises a resetting timer, configured to be started when the detecting module obtains the information about the first event, wherein the second event comprises an expiry of the resetting timer.

Preferably, the resetting device further comprises an output module, configured to output an alarm signal based on the first event.

Preferably, the resetting device further comprises a counter, configured to count a number of times of the detecting module controlling the switch module to decouple the at least one connection.

Preferably, the resetting device further comprises a limiting module, configured to stop the detecting module from obtaining the information about the first event or controlling the switch module to decouple or couple the at least one connection if a number of times of or a frequency of the detecting module controlling the switch module to decouple the at least one connection exceeds a threshold value.

Preferably, the resetting device further comprises a remote control module, configured to control at least one of the switch module, the detecting module, a timer module, an output module, a counting module or a limiting module based on a remote signal.

The present disclosure relates to a resetting method. The resetting method comprises:
obtaining information about a first event from at least one first end,
decoupling at least one connection between each of the at least one first end and each of at least one second end based on the obtained information, and
coupling the at least one connection based on a second event associated with the first event,
wherein the at least one first end is configured to couple to a power grid.

Various embodiments may preferably implement the following features:
Preferably, obtaining the information about the first event from the at least one first end comprises detecting the first event at the at least one first end.

Preferably, the first event comprises an interrupted power supply at the at least one first end or a supply voltage determined based on the at least one voltage being smaller than a first threshold voltage.

Preferably, the second event comprises at least one of the following: the first event ends, a power supplied to the at least one first end or a supply voltage determined based on the at least one voltage is greater than a second threshold voltage.

Preferably, the resetting method further comprises:
providing an impedance to the at least one first end when the at least one connection is decoupled,
wherein preferably the impedance is configured such that a load of the detecting module is undetectable from the at least one first end.

Preferably, the at least one first end is configured to couple to the power grid via at least one of a metering module or a protection switch.

Preferably, the at least one second end is configured to couple to at least one of a distribution device or at least one load.

Preferably, the resetting method further comprises:
starting a resetting timer when obtaining the information about the first event, wherein the second event comprises an expiry of the resetting timer.

Preferably, the resetting method further comprises outputting an alarm signal based on the first event.

Preferably, the resetting method further comprises counting a number of times of decoupling the at least one connection.

Preferably, the resetting method further comprises stopping obtaining the information about the first event, or decoupling or coupling the at least one connection if a number of times or a frequency of decoupling the at least one connection exceeds a threshold value.

The present disclosure relates to a resetting device. The resetting device comprises a processor configured to perform any of the aforementioned resetting methods.

The present disclosure relates to a computer program product comprising a computer-readable program medium code stored thereupon, the code, when executed by a processor, causing the processor to implement a wireless communication method recited in any one of foregoing methods.

The present disclosure also relates to the following preferred items:
1. A resetting method, comprising:
   obtaining information about a first event from at least one first end,
   decoupling at least one connection between each of the at least one first end and each of at least one second end based on the obtained information, and
   coupling the at least one connection based on a second event associated with the first event,
   wherein the at least one first end is configured to couple to a power grid.
2. The resetting method of item 1, wherein obtaining the information about the first event from the at least one first end comprises detecting the first event at the at least one first end.
3. The resetting method of item 1 or 2, wherein the first event comprises an interrupted power supply at the at least one first end or a supply voltage determined based on the at least one voltage being smaller than a first threshold voltage.
4. The resetting method any of items 1 to 3, wherein the second event comprises at least one of the following: the first event ends, a power supplies to the at least one first end or a supply voltage determined based on the at least one voltage is greater than a second threshold voltage.
5. The resetting method of any of items 1 to 4, further comprising:
   providing an impedance to the at least one first end when the at least one connection is decoupled,
   wherein preferably the impedance is configured such that a load of the detecting module is undetectable from the at least one first end.
6. The resetting method of any of items 1 to 5, wherein the at least one first end is configured to couple to the power grid via at least one of a metering module or a protection switch.
7. The resetting method of any of items 1 to 6, wherein the at least one second end is configured to couple to at least one of a distribution device or at least one load.
8. The resetting method of any of items 1 to 7, further comprising:
   starting a resetting timer when obtaining the information about the first event,
   wherein preferably the second event comprises an expiry of the resetting timer.
9. The resetting method of any of items 1 to 8, further comprising:
   outputting an alarm signal based on the first event.
10. The resetting method of any of items 1 to 9, further comprising:
   counting a number of times of decoupling the at least one connection.
11. The resetting method of any of items 1 to 10, further comprising:
   stopping obtaining the information about the first event, or decoupling or coupling the at least one connection if a number of times or a frequency of decoupling the at least one connection exceeds a threshold value.
12. A resetting device, comprising a processor configured to perform the resetting method of any one of items 1 to 11.
13. A computer program product comprising a computer-readable program medium code stored thereupon, the code, when executed by a processor, causing the processor to implement a resetting method recited in any one of items 1 to 11.

The exemplary embodiments disclosed herein are directed to providing features that will become readily apparent by reference to the following description when taken in conjunction with the accompany drawings. In accordance with various embodiments, exemplary systems, methods, devices and computer program products are disclosed herein. It is understood, however, that these embodiments are presented by way of example and not limitation, and it will be apparent to those of ordinary skill in the art who read the present disclosure that various modifications to the disclosed embodiments can be made while remaining within the scope of the present disclosure.

Thus, the present disclosure is not limited to the exemplary embodiments and applications described and illustrated herein. Additionally, the specific order and/or hierarchy of steps in the methods disclosed herein are merely exemplary approaches. Based upon design preferences, the specific order or hierarchy of steps of the disclosed methods or processes can be re-arranged while remaining within the scope of the present disclosure. Thus, those of ordinary skill in the art will understand that the methods and techniques disclosed herein present various steps or acts in a sample order, and the present disclosure is not limited to the specific order or hierarchy presented unless expressly stated otherwise.

The above and other aspects and their implementations are described in greater detail in the drawings, the descriptions, and the claims.
FIG. 1 shows a schematic diagram of a power system 100 according to an embodiment of the present disclosure.
FIG. 2 shows a schematic diagram of a resetting device according to an embodiment of the present disclosure.
FIG. 3 shows a schematic diagram of a resetting device according to an embodiment of the present disclosure.
FIG. 4 shows a schematic diagram of a resetting device according to an embodiment of the present disclosure.
FIG. 5 shows a schematic diagram of a resetting device according to an embodiment of the present disclosure.
FIG. 6 shows a schematic diagram of a resetting device according to an embodiment of the present disclosure.
FIG. 7 shows a schematic diagram of a resetting device according to an embodiment of the present disclosure.
FIG. 8 shows a schematic diagram of a resetting device according to an embodiment of the present disclosure.
FIG. 9 shows a schematic diagram of resetting devices for a split phase and/or tri-phase system according to an embodiment of the present disclosure.
FIG. 10 shows a schematic diagram of resetting devices for a split phase and/or tri-phase system according to an embodiment of the present disclosure.
FIG. 11 shows a schematic diagram of a resetting device according to an embodiment of the present disclosure.
FIG. 12 shows a flowchart of a method according to an embodiment of the present disclosure.

In the present disclosure, the term "coupled" may represent electrically coupled, directly coupled or indirectly coupled. In some embodiments, the term "coupled" may be equal to connected.

In the present disclosure, the term "reset" may be equal to "rearm", "reengage" or "reconnect".

In some embodiments, the "smart meter" type of energy metering includes the current (or power) limiter and an automatic rearm system. The automatic rearm system allows the smart meter to be outside the customer premises (i.e. out of physical reachable area of customer) and to be still restorable in response to a specific event. For example, the user may act upon the premises installation and by some means disconnect the private electrical installation from the grid. The smart meter (i.e. the automatic rearm system) may reestablish the supply if detecting/determining that this disconnection lasts for a period of time (e.g. several seconds).

In an embodiment of the present disclosure, a resetting device is disclosed to be installed (just) after the main switch at the private distribution bord. The resetting device is able to fully disconnect the full user installation from the main grid. By doing this, the "smart meter" detects the disconnection and rearms itself (e.g. to provide the power). The resetting device detects this resetting event and subsequently reconnects the customer system and the grid. Note that, during the time the resetting device is disconnected, the resetting device presents itself to the smart meter in such a high impedance that the resetting device is not recognized as a system load. Thus, the power can be automatically reestablished.

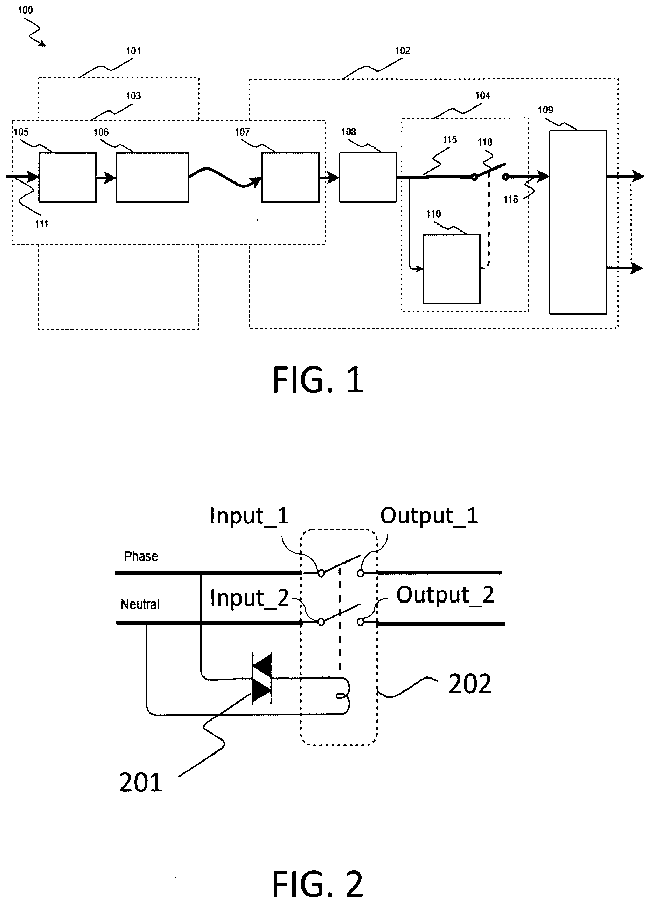

FIG. 1 shows a schematic diagram of a power system 100 according to an embodiment of the present disclosure. The power system shown in FIG. 1 comprises an energy distribution system 103, a protection switch 108, a resetting device 104 and a distribution device 109. The energy distribution system 103 may be owned by an energy distribution company. In FIG. 1, the energy distribution system 103 comprises a thermal melt down fuse device 105, a metering device 106 (e.g. smart meter) and a limiting device 107 (e.g. current limiter and/or power limiter). The thermal melt down fuse device 105 and the metering device 106 are (usually) which are usually accessible from a public area 101. The limiting device 107 may be installed in a private area 102 (e.g. inside a customer premises) and may not be accessible from the public area 101. Note that the limiting device 107 may be integrated in the metering device 106 and/or the metering device 106 comprises/performs functions of the limiting device 107 (e.g. the current (or power) limiter). The protection switch 108 (e.g. a main switch) is configured to couple to the grid 111 via the energy distribution system 103. The resetting device 104 is configured to be coupled between the protection switch 108 and the distribution device 109. The distribution device 109 is configured to distribute the power/electricity to at least one loading (e.g. home appliances). For example, the distribution device 109 may comprise a differential protection module, a circuit breaker, ..., etc.

In an embodiment, the resetting device 104 is configured to obtain information of a resetting event (e.g. detecting/determining the resetting event). For example, the resetting event may comprise at least one of:
- no power is provided from the grid 111,
- an interrupted power is provided from the grid 111,
- a voltage of the power provided from the grid 111 is (has become) lower than a first threshold voltage.

In an embodiment, the interrupted power may comprise a voltage lower than the first threshold voltage.

Based on (or in response to) the resetting event, the resetting device 104 decouples the connection between the main switch 108 and the distribution device 109. Note that, when decoupling the connection between the main switch 108 and the distribution device 109, the resetting device 104 provides presents itself to the energy distribution system 103 (e.g. metering device 106) in a high impedance such that the resetting device 104 is not recognized as a system load by the energy distribution system 103 (e.g. metering device 106).

In an embodiment, the resetting device 104 couples based on a reestablishing event associated with the resetting event. For example, the reestablishing event comprises at least one of:
- the resetting event ends,
- the power is provided from the grid,
- the interrupted power is not provided from the grid,
- the voltage of the power provided from the grid is (has become) greater than a second threshold voltage
- a period passed after the resetting event occurred.

By adopting the resetting device 104, the energy distribution system 103 (e.g. metering device 106) may be automatically restored after being tripped due to certain events.

In the embodiment shown in FIG. 1, the resetting device 104 comprises a switch module 118 and a detecting module 110. The switch module 118 is coupled between at least one first end 115 (i.e. protection switch 108) and at least one second end 116 (i.e. distribution device 109) and is configured to control a connection between each first end 115 and each second end 116. The first end(s) 115 is coupled to the grid, e.g. via the protection switch and/or the energy distribution system 103 (metering device 106). For example, the first end(s) 115 is coupled to phase line(s) and/or neutral line(s) of the grid. In an embodiment, the switch module 118/the first end(s) 115 is (only) coupled to the phase line (the line carrying the power/energy/electricity) of the grid. The detecting module 110 is configured to obtain the information of the resetting event (e.g. detect the voltage of the at least one first end 115) and to control the switch module to decouple/couple the connection between the main switch 108 and the distribution device 109.

In an embodiment, the resetting device 104 may be integrated in the protection switch 108.

In an embodiment, the resetting device 104 may be moved forward to the protection switch 108. That is, the resetting device 104 may be coupled between the energy distribution system 103 and the protection switch 108.

In an embodiment, the resetting device 104 may be integrated in the distribution device 109. That is, the resetting device 104 may be directly coupled to the at least one loading (e.g. home appliance).

FIG. 2 shows a schematic diagram of a resetting device according to an embodiment of the present disclosure. The resetting device shown in FIG. 2 comprises a diode AC switch (DIAC) 201 and contactor 202. The contactor 202 comprises a coil and two switches (i.e. switch module), wherein one switch is coupled between an input end Input_1 and an output end Output_1 and another switch is coupled between an input end Input_2 and an output end Output_2. In this embodiment, the Input_1 is coupled to a phase line of the grid and the Input_2 is coupled to a neutral line of the grid. When no AC power is applied to the Input_1 and Input_2 or the voltage of the Input_1 (i.e. the voltage between the Input_1/phase line and the Input_2/neutral line) is below the first threshold voltage (e.g. breakdown/breakover voltage) of the DIAC 201, the coil in the contactor 202 is not energized, so the switches are opened and the Output_1 and Output_2 are decoupled from (i.e. not coupled to) the Input_1 and Input_2 respectively. If the power is applied to the Input_1 and Input_2 and/or the voltage of the Input_1 is above the second threshold voltage (e.g. the breakdown voltage of the DIAC 201), the DIAC 201 is conducted and permits the power to energize the coil in the contactor 202 and to connect the Input_1 and Input_2 to the Output_1 and Output_2 respectively. That is, the electrical power is allowed to pass from Input_1 and Input_2 to the Output_1 and Output_2.

Note that, no AC power is applied to the Input_1 and Input_2 or the voltage of the Input_1 (i.e. the voltage between the Input_1/phase line and the Input_2/neutral line) is below the first threshold voltage (e.g. a breakdown/breakover voltage) of the DIAC 201, the DIAC 201 is not conducting and an impedance presented by this circuit on the Input_1 and Input_2 is very high (e.g. at least several hundred kiloohms, depending on specific parameters of the DIAC 201). Consequently, any impedance detection system connected to the Input_1 and Input_2 may not detect the contactor 202 as a load. Furthermore, any device connected to the Output_1 and Output_2 is also undetectable since the Output_1 and Output_2 are decoupled from (i.e. not connected to) the Input_1 and Input_2 by the nonenergized coil in the contactor 202. The high impedance presented by detecting module enables any device using the impedance measured to enable an automatic activation. For example, the automatic rearming function of a "smart meter" after tripping with an over the limit current (or power) detection. The resetting device isolates the Output_1 and Output_2 from the Input_1 and Input_2 when no power is being applied. The equipment connected to the Output_1 and Output_2 may be protected from unwanted electrical discharges. An example is the protection of equipment connected to the output when no grid power is present, for example with a floating grid zone, vulnerable to electrical thunderstorms and other electric type discharges, natural or manmade.

In an embodiment, the DIAC 201 may comprise a breakover voltage (VBO) higher than the voltage used by the impedance measuring device connected to the Input_1 and Input_2 and/or lower than the minimal value of activating the contactor 202 (e.g. the minimum voltage enabling the coil to close the switches). In an embodiment, a values range of the VBO may be from 20 to 40 Volt. The VBO is determined experimentally with the specific impedance detector system and the contactor required for the application. The other DIAC parameters such as maximum current and power also need to be appropriately designed according to specific implementation.

In an embodiment, the DIAC 201 may be replaced by a silicon bilateral voltage triggered switch (SIDAC) which is a higher rated DIAC.

Given the very compact size of the DIAC 201 or the circuit has the same function of DIAC 201, it is possible to integrate the DIAC 201 or the circuit has the same function of DIAC 201in the same enclosure. In other words, the resetting device may be considered as a new type of contactor component that does not present a load (from its own coil) until its input voltage exceeds a certain voltage threshold (e.g. the trigger/breakdown/breakover voltage of DIAC).

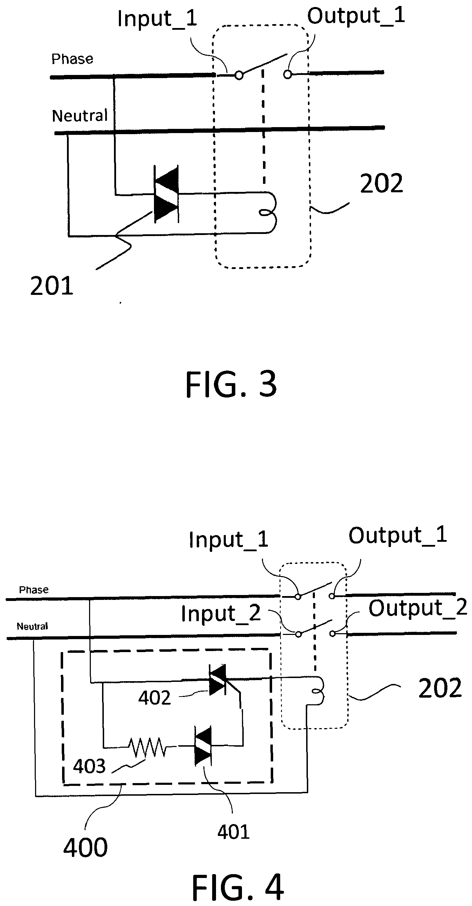

FIG. 3 shows a schematic diagram of a resetting device according to an embodiment of the present disclosure. The resetting device shown in FIG. 3 is similar to that shown in FIG. 2, thus the components having the same functions use the same symbols. Comparing to the resetting device shown in FIG. 2, the resetting device shown in FIG. 3 comprises only one switch as the switch module. The switch (i.e. switch module) is coupled to only the phase line of the grid. When no AC power is applied to the Input_1 or the voltage of the Input_1 (i.e. the voltage between the Input_1/phase line and neutral line) is below the first threshold voltage (e.g. breakdown/breakover voltage) of the DIAC 201, the coil in the contactor 202 is not energized, so the switch is opened and the Output_1 is decoupled from (i.e. not coupled to) the Input_1. If the power is applied to the Input_1 and/or the voltage of the Input_1 is above the second threshold voltage (e.g. the breakdown/breakover voltage of the DIAC 201), the DIAC 201 is conducted and permits the power to energize the coil in the contactor 202 and to connect the Input_1 to the Output_1. That is, the electrical power is allowed to pass from Input_1 to the Output_1.

In some embodiments, the DIAC 201 in FIGS. 2 and 3 may be replaced by other circuitry having the same functions.

In some embodiments, the DIAC 201 in FIGS. 2 and 3 may be replaced by a direct current switch (e.g. a diode).

In some embodiments, the DIAC 201 in FIGS. 2 and 3 may be replaced by a switch which is coupled between the phase line and the coil of the contactor 202 and is controlled by the voltage on the phase line. For example, a control gate of this switch may be coupled to the power line and/or Input_1. If the voltage between the phase line and the neutral line is below the first threshold voltage, the switch is open and the coil in the contactor 202 is not energized. Under such a condition, the switch(es) in the contactor 202 is opened. If the voltage between the phase line and the neutral line exceeds the second threshold voltage, the switch is closed and the coil in the contactor 202 is energized. As a result, the switch(es) in the contactor 202 is closed.

In an embodiment, the first threshold voltage is different from or the same with the second threshold voltage.

FIG. 4 shows a schematic diagram of a resetting device according to an embodiment of the present disclosure. The resetting device shown in FIG. 4 is similar to that shown in FIG. 2, thus the components having the same functions use the same symbols. In FIG. 4, the DIAC 201 is replaced by a detecting module 400 comprising a DIAC 401, a TRIAC 402 and a resistor 403. The DIAC is coupled between the phase line and a control gate of the TRIAC 402 via the resistor 403. The DIAC 401 is conducted when the power is provided to the phase line and/or a voltage between the phase line and the neutral line exceeds a threshold voltage of the DIAC 401. Under such a condition, the TRIAC 402 is activated by a current flowing through the resistor 403 and the DIAC 401. The resistor 403 limits the maximum current reaching the control gate of the TRIAC 402, to avoid damaging the TRIAC 402. The DIAC 401 prevents the current from flowing when the voltage between the phase line and the neutral line is lower than a certain voltage threshold. The detecting module 400 presents a high impedance in view from the Input_0 and Input_1 (e.g. in view of the metering device 106).

In an embodiment the resistor 403 may be omitted.

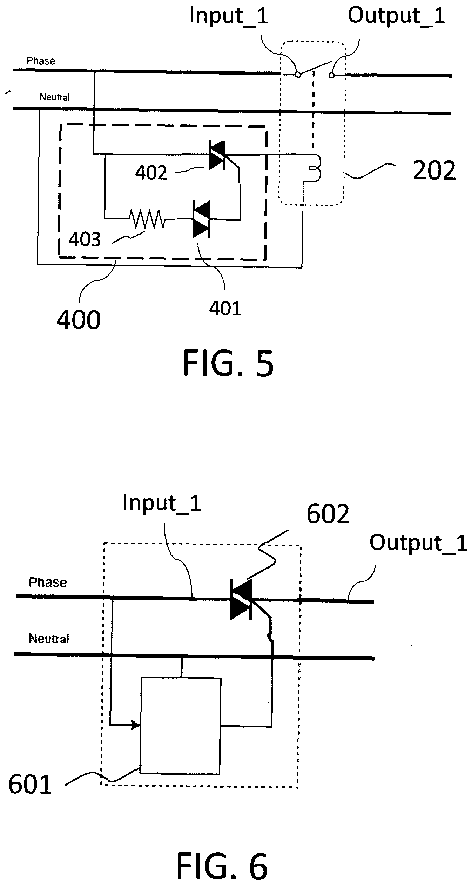

FIG. 5 shows a schematic diagram of a resetting device according to an embodiment of the present disclosure. The resetting device shown in FIG. 5 is similar to that shown in FIG. 4, thus the components having the same functions use the same symbols. In FIG. 5, the contactor 202 comprises one switch coupled between the Input_1 (i.e. the phase line) and the Output_2. That is, the contactor 202 controls only the connection on the phase line.

Note that the DIAC 401 and the TRIAC 402 in FIGS. 4 and 5 may be replaced by (direct current) switches having/performing the same functions. For example, the TRIAC 402 may be substituted by a first (direct current) switch coupled between the phase line and the coil of the contactor 202; and the DIAC 401 may be substituted by a second (direct current) switch which is coupled between the phase line and a control gate of the first switch and is controlled by the voltage between the phase line and the neutral line.

In an embodiment, the resetting device may be implemented by using solid state electronics instead of electromechanical components (for example contactors and relays).

FIG. 6 shows a schematic diagram of a resetting device according to an embodiment of the present disclosure. The resetting device shown in FIG. 6 comprises a detecting module 601 and a TRIAC 602. The detecting module 601 obtains (e.g. detects) the information of the resetting event and outputs a control signal based on the obtained voltage to the control gate of the TRIAC 602 coupled between the input end Input_1 and the output end Output_1. The TRIAC 602 is activated or inactivated based on the control signal received at the control gate. For example, when the obtained information indicates that the resetting event occurs (e.g. no (AC) power or an interrupted power is provided on the phase line or the voltage between the phase line and the neutral line becomes lower than the first threshold voltage), the detecting module 601 adjusts the control signal to inactivate the TRIAC 602. Note that, the detecting module 601 provides a high impedance in view from the phase line when controlling the TRIAC 602 to be inactivated, to make a load of the detecting module undetectable in view from the phase line. Based on the obtained information, the detecting module 601 may determine the reestablishing event occurs (e.g. (AC) power or an interrupted power is provided on the phase line or the voltage between the phase line and the neutral line exceeds the second threshold voltage) and control the TRIAC 602 to be activated.

In an embodiment, the resetting device shown in FIG. 6 further comprises another TRIAC coupled between the neutral line and an output end Output_2, wherein this TRIAC receives the same control signal as the TRIAC 602.

In an embodiment, the TRIAC 602 (i.e. a switch in the switch module) may be replaced by a direct current switch. For example, the direct current switch is also coupled between the Input_1 (i.e. the phase line) and the Output_1 (i.e. the distribution module 109 or at least one load) and is controlled by the control signal outputted from the detecting module 601.

In an embodiment, the resetting device shown in FIG. 6 may further comprises a direct current switch coupled between the neutral line and distribution module 109. The newly added direct current switch is also controlled by the control signal outputted from the detected module 601 and performs the same operations as the TRIAC 602.

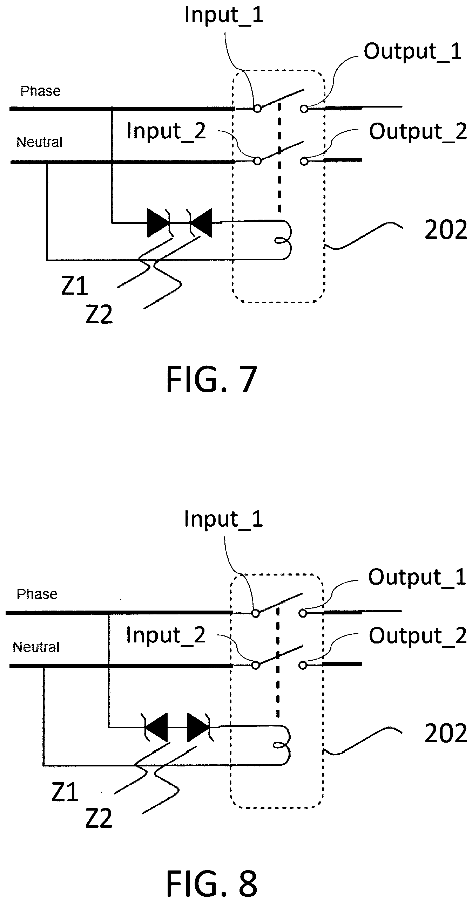

FIG. 7 shows a schematic diagram of a resetting device according to an embodiment of the present disclosure. The resetting device shown in FIG. 7 is similar to that shown in FIG. 2, thus the components have the same functions use the same symbols. In FIG. 7, the DIAC 201 is replaced by two opposing Zener diodes Z1 and Z2.

The operation principles of the resetting device shown in FIG. 7 are the same with those of the resetting device shown in FIG. 2 and are omitted herein for brevity.

FIG. 8 shows a schematic diagram of a resetting device according to an embodiment of the present disclosure. The resetting device shown in FIG. 8 is similar to that shown in FIG. 7, thus the components have the same functions use the same symbols. Note that, the Zener diodes Z1 and Z2 shown in FIG. 8 have different direction when comparing to the Zener diodes Z1 and Z2 shown in FIG. 7.

In an embodiment, the resetting device may be used for split phase and/or three-phase systems. In this particular case, each phase (line) has a complete replica of the resetting device for the single-phase version (e.g. that shown in any of FIGS. 2 to 8).

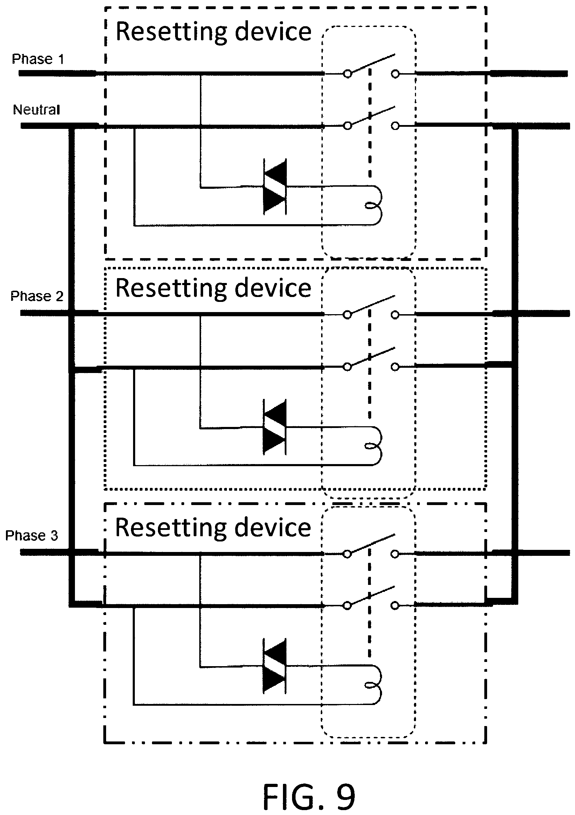

FIG. 9 shows a schematic diagram of resetting devices for a split phase and/or three-phase system according to an embodiment of the present disclosure. In FIG. 9, each of phase lines Phase 1, Phase 2 and Phase 3 is coupled to a resetting device. The resetting devices shown in FIG. 9 use the resetting device shown in FIG. 2. Note that, the resetting devices used for the split phase and/or three-phase system can be any of FIGS. 2 to 8. That is, multiple resetting devices may be integrated as single device for the split phase and/or tri-phase system. The integrated device (i.e. the resetting device for the split phase and/or tri-phase system) comprises multiple input ends configured to couple to phase lines and neutral line(s) and multiple corresponding output ends as shown in FIG. 9.

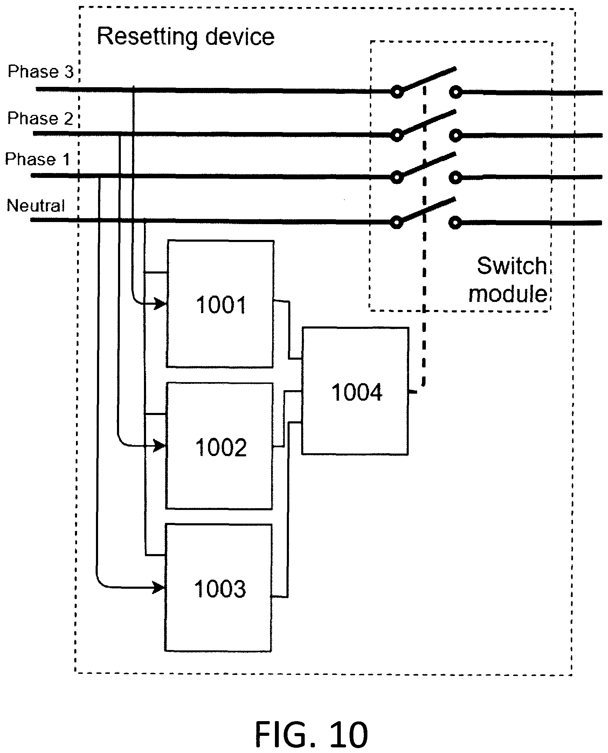

FIG. 10 shows a schematic diagram of a resetting device for a split phase and/or tri-phase system according to an embodiment of the present disclosure. In FIG. 10, the resetting device comprises detecting modules 1001, 1002, 1003 and a logic module 1004. In an embodiment, each of the detecting modules 1001, 1002, 1003 may be the detecting module 601. Note that the detecting modules 1001, 1002, 1003 may be coupled to the neutral line. The logic module 1004 is configured to generate corresponding control signals of switches in the switch module based on the control signals outputted from the detecting modules 1001, 1002, 1003. For example, the logic module 1004 may generate the control signal of the switch coupled to the phase 1 based on the control signal outputted by the detecting module 1001, generate the control signal of the switch coupled to the phase 2 based on the control signal outputted by the detecting module 1002, and so on. The control signal of the switch coupled to the phase line may be generated based on the control signals outputted by the detecting modules 1001, 1002, 1003. In an embodiment, the logic module 1004 may be implemented by logic gate(s) (e.g. AND, OR, NAND, NOR, XOR logic gates).

In an embodiment, the resetting device may further comprise at least one of the following functions/components:
1) Timer to delay rearm: In an embodiment, the resetting device may have a timer which is started when or after the detecting module controls the switch module to decouple the connection(s). After the timer expires, the switch module (is allowed to) couple the connection(s). As a result, the timer may extend the period of the connection(s) being decoupled.
   In an embodiment, a value of the timer (e.g. the countdown time of the timer) may be a fixed and/or pre-established value.
   In an embodiment, a value of the timer (e.g. the countdown time of the timer) may be a randomly generated value between the pre-established minimum and maximum time values.
2) Additional output module: The output module is configured to enable an external device or the customer to obtain information on the status of the resetting device and whether the resetting device properly operations (e.g. whether the detecting module and/or switching module functions properly). For example, the output module may comprise an alarm. In an embodiment, the output module may comprise a light emitting unit (e.g. light emitting diode).

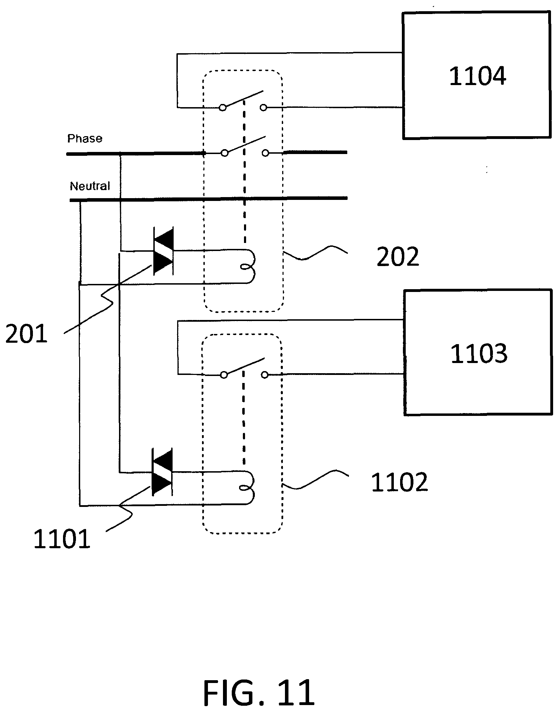

FIG. 11 shows a schematic diagram of a resetting device according to an embodiment of the present disclosure. The resetting device shown in FIG. 11 is similar to that shown in FIG. 2, thus the components have the same functions use the same symbols. The resetting device shown in FIG. 11 further comprises a DIAC 1101, a contactor 1102 and alarming modules 1103 and 1104 which output a sound signal when corresponding switch is open. Specifically, the contactor 202 further comprises a switch coupled to the alarming module 1104. When the DIAC 201 is conducted and the coil in the contactor 202 is energized, the switches in the contactor 202 is close and the alarming module 1104 is inactivated. On the other hand, the DIAC 1101 is also conducted and the coil in the contactor 1102 is also energized, the switches in the contactor 1102 is close and the alarming module 1103 is inactivated. When the DIAC 201 is not conducted and the coil in the contactor 202 is not energized, the switches in the contactor 202 is open and the alarming module 1104 is activated to generate alarm signals (e.g. sound and/or light signal). In addition, the DIAC 1101 is not conducted and the coil in the contactor 1102 is not energized, the switches in the contactor 1102 is open and the alarming module 1103 is activated to generate alarm signals.

In the embodiment shown in FIG. 11, the alarming module 1103 generates the alarm signal based on the detections associated with the phase line and neutral line. In addition, the alarming module 1104 generates the alarm signal based on the switch module being active or in active.

In an embodiment, one of the alarming modules 1103 and 1104 is omitted.

### 3) Counter for ream cycles

In this embodiment, the counter counts the number of times of the reset action (e.g. the switch module decoupling the connection and/or the detecting module controlling the switch module to decouple the connection), to allow the users to know how many times the reset action occurred, e.g., in a certain pre-established period of time and/or a product life-time.

### 4) Limiter of number of reset actions:

In this embodiment, the limiter may comprise a counter functioning as described in the previous item 3). The maximum number of reset actions performed by the resetting device may be limited by a pre-established number. After the number of reset actions reaches the pre-established number, the resetting device may be paused until a specific intervention is executed, for example a function reset button is required to be pressed.

In an embodiment, pausing the resetting device may trigger a generation of an alarm signal (e.g. sound and/or light signal).

### 5) Remote control module for different aspects/components of the resetting device.

In this embodiment, at least one of the previously disclosed functions and/or components may be controlled based on a remote control signal. For example, the remote control module may comprise the ability to set the working parameters of the previous functions remotely, for example by using a digital communication media like a computer network.

In an embodiment, the remote control signal may be a wired signal and/or a wireless signal. For example, the remote control signal may be transmitted via the network.

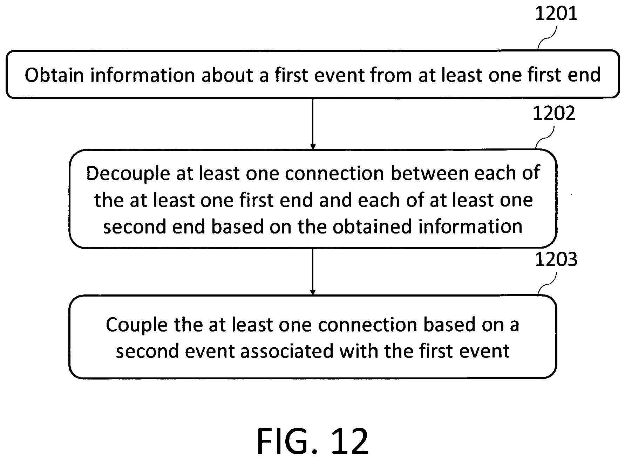

FIG. 12 shows a flowchart of a method according to an embodiment of the present disclosure. The method shown in FIG. 12 may be used in a resetting device and comprises the following steps:
Step 1201: Obtain information about a first event from at least one first end.

Step 1202: Decouple at least one connection between each of the at least one first end and each of at least one second end based on the obtained information.

Step 1203: Couple the at least one connection based on a second event associated with the first event.

Specifically, the resetting device obtains the information of a first event (e.g. resetting event) from at least one first end. In this embodiment, the at least one first end is configured to couple to a (power) grid. Based on the obtained information, the resetting device decouples at least one connection between each of the at least one first end and each of at least one second end. The resetting device further couples the at least one connection based on a second event (e.g. reestablishing event) associated with the first event (e.g. when detecting the second event).

In an embodiment, the resetting device obtains the information about the first event from the at least one first end by detecting the first event at the at least one first end.

In an embodiment, the first event comprises an interrupted power supply at the at least one first end or a supply voltage determined based on the at least one voltage being smaller than a first threshold voltage.

In an embodiment, the second event comprises at least one of the following: the first event ends, a power supplied to the at least one first end or a supply voltage determined based on the at least one voltage is greater than a second threshold voltage.

In an embodiment, the resetting device is configured to provide an impedance to the at least one first end when the at least one connection is decoupled, wherein the impedance is configured such that a load of the detecting module is undetectable from the at least one first end.

In an embodiment, the at least one first end is configured to couple to the power grid via at least one of a metering module (e.g. smart module or energy distribution system) or a protection switch (e.g. main switch).

In an embodiment, the at least one second end is configured to couple to at least one of a distribution device or at least one load (e.g. home appliance).

In an embodiment, the resetting device starts a resetting timer when obtaining the information about the first event, wherein the second event comprises an expiry of the resetting timer.

In an embodiment, the resetting device outputs (e.g. generates) an alarm signal based on the first event.

In an embodiment, the resetting device counts a number of times of decoupling the at least one connection. The counted number may be displayed by at least one displayed unit (e.g. seven-segment display(s)).

In an embodiment, the resetting device stops obtaining the information about the first event, or decoupling or coupling the at least one connection if a number of times or a frequency of decoupling the at least one connection exceeds a threshold value.

In an embodiment, the resetting device may comprise a processor configured to perform the aforementioned method.

While various embodiments of the present disclosure have been described above, it should be understood that they have been presented by way of example only, and not by way of limitation. Likewise, the various diagrams may depict an example architectural or configuration, which are provided to enable persons of ordinary skill in the art to understand exemplary features and functions of the present disclosure. Such persons would understand, however, that the present disclosure is not restricted to the illustrated example architectures or configurations, but can be implemented using a variety of alternative architectures and configurations. Additionally, as would be understood by persons of ordinary skill in the art, one or more features of one embodiment can be combined with one or more features of another embodiment described herein. Thus, the breadth and scope of the present disclosure should not be limited by any one of the above-described exemplary embodiments.

It is also understood that any reference to an element herein using a designation such as "first," "second," and so forth does not generally limit the quantity or order of those elements. Rather, these designations can be used herein as a convenient means of distinguishing between two or more elements or instances of an element. Thus, a reference to first and second elements does not mean that only two elements can be employed, or that the first element must precede the second element in some manner.

A skilled person would further appreciate that any one of the various illustrative logical blocks, units, processors, means, circuits, methods and functions described in connection with the aspects disclosed herein can be implemented by electronic hardware (e.g., a digital implementation, an analog implementation, or a combination of the two), firmware, various forms of program or design code incorporating instructions (which can be referred to herein, for convenience, as "software" or a "software unit"), or any combination of these techniques.

To clearly illustrate this interchangeability of hardware, firmware and software, various illustrative components, blocks, units, circuits, and steps have been described above generally in terms of their functionality. Whether such functionality is implemented as hardware, firmware or software, or a combination of these techniques, depends upon the particular application and design constraints imposed on the overall system. Skilled artisans can implement the described functionality in various ways for each particular application, but such implementation decisions do not cause a departure from the scope of the present disclosure. In accordance with various embodiments, a processor, device, component, circuit, structure, machine, unit, etc. can be configured to perform one or more of the functions described herein. The term "configured to" or "configured for" as used herein with respect to a specified operation or function refers to a processor, device, component, circuit, structure, machine, unit, etc. that is physically constructed, programmed and/or arranged to perform the specified operation or function.

Furthermore, a skilled person would understand that various illustrative logical blocks, units, devices, components and circuits described herein can be implemented within or performed by an integrated circuit (IC) that can include a general purpose processor, a digital signal processor (DSP), an application specific integrated circuit (ASIC), a field programmable gate array (FPGA) or other programmable logic device, or any combination thereof. The logical blocks, units, and circuits can further include antennas and/or transceivers to communicate with various components within the network or within the device. A general purpose processor can be a microprocessor, but in the alternative, the processor can be any conventional processor, controller, or state machine. A processor can also be implemented as a combination of computing devices, e.g., a combination of a DSP and a microprocessor, a plurality of microprocessors, one or more microprocessors in conjunction with a DSP core, or any other suitable configuration to perform the functions described herein. If implemented in software, the functions can be stored as one or more instructions or code on a computer-readable medium. Thus, the steps of a method or algorithm disclosed herein can be implemented as software stored on a computer-readable medium.

Computer-readable media includes both computer storage media and communication media including any medium that can be enabled to transfer a computer program or code from one place to another. A storage media can be any available media that can be accessed by a computer. By way of example, and not limitation, such computer-readable media can include RAM, ROM, EEPROM, CD-ROM or other optical disk storage, magnetic disk storage or other magnetic storage devices, or any other medium that can be used to store desired program code in the form of instructions or data structures and that can be accessed by a computer.

In this document, the term "unit" as used herein, refers to software, firmware, hardware, and any combination of these elements for performing the associated functions described herein. Additionally, for purpose of discussion, the various units are described as discrete units; however, as would be apparent to one of ordinary skill in the art, two or more units may be combined to form a single unit that performs the associated functions according embodiments of the present disclosure.

Additionally, memory or other storage, as well as communication components, may be employed in embodiments of the present disclosure. It will be appreciated that, for clarity purposes, the above description has described embodiments of the present disclosure with reference to different functional units and processors. However, it will be apparent that any suitable distribution of functionality between different functional units, processing logic elements or domains may be used without detracting from the present disclosure. For example, functionality illustrated to be performed by separate processing logic elements, or controllers, may be performed by the same processing logic element, or controller. Hence, references to specific functional units are only references to a suitable means for providing the described functionality, rather than indicative of a strict logical or physical structure or organization.

Various modifications to the implementations described in this disclosure will be readily apparent to those skilled in the art, and the general principles defined herein can be applied to other implementations without departing from the scope of this disclosure. Thus, the disclosure is not intended to be limited to the implementations shown herein, but is to be accorded the widest scope consistent with the novel features and principles disclosed herein, as recited in the claims below.

## Claims

1. A resetting device, comprising:
a switch module, comprising at least one first end and at least one second end, wherein the at least one first end is configured to couple to a power grid, and
a detecting module, configured to obtain information about a first event from at least one first end and to control the switch module to:
decouple at least one connection between each of the at least one first end and each of the at least one second end based on the obtained information, and
couple the at least one connection based on a second event associated with the first event.

2. The resetting device of claim 1, wherein obtaining the information about the first event from the at least one first end comprises detecting the first event at the at least one first end.

3. The resetting device of claim 1 or 2, wherein the first event comprises an interrupted power supply at the at least one first end or a supply voltage determined based on the at least one voltage being smaller than a first threshold voltage.

4. The resetting device any of claims 1 to 3, wherein the second event comprises at least one of the following: the first event ends, a power supplied to the at least one first end or a supply voltage determined based on the at least one voltage being greater than a second threshold voltage.

5. The resetting device of any of claims 1 to 4, wherein the detecting module is configured to provide an impedance to the at least one first end when the switch module decouples the at least one connection,
wherein the impedance is configured such that a load of the detecting module is undetectable from the at least one first end.

6. The resetting device of any of claims 1 to 5, wherein the at least one first end is configured to couple to the power grid via at least one of a metering module or a protection switch.

7. The resetting device of any of claims 1 to 6, wherein the at least one second end is configured to couple to at least one of a distribution device or at least one load.

8. The resetting device of any of claims 1 to 7, wherein the detecting module comprises:
a coil configured to control the switch module, wherein the coil comprises a first coil end coupled to the first end coupled to a natural line of the power grid and a second coil end, and
a current switch unit, configured to be coupled between the first end coupled to a phase line of the power grid and the second coil end.

9. The resetting device of claim 8, wherein the current switch unit comprises:
a first current switch, coupled between the first end coupled to the phase line and the second coil end, and
a second current switch, coupled between the first end coupled to the first current switch and a control gate of the first current switch.

10. The resetting device of claim 9, wherein a resistor is coupled between the first end coupled to the first current switch and the second current switch.

11. The resetting device of any of claims 1 to 10, further comprising:
a resetting timer, configured to be started when the detecting module obtains the information about the first event,
wherein the second event comprises an expiry of the resetting timer.

12. The resetting device of any of claims 1 to 11, further comprising:
an output module, configured to output an alarm signal based on the first event.

13. The resetting device of any of claims 1 to 12, further comprising:
a counter, configured to count a number of times of the detecting module controlling the switch module to decouple the at least one connection.

14. The resetting device of any of claims 1 to 13, further comprising:
a limiting module, configured to stop the detecting module from obtaining the information about the first event or controlling the switch module to decouple or couple the at least one connection if a number of times of or a frequency of the detecting module controlling the switch module to decouple the at least one connection exceeds a threshold value.

15. The resetting device of any of claims 1 to 14, further comprising:
a remote control module, configured to control at least one of the switch module, the detecting module, a timer module, an output module, a counting module or a limiting module based on a remote signal.

16. A resetting method, comprising:
obtaining information about a first event from at least one first end,
decoupling at least one connection between each of the at least one first end and each of at least one second end based on the obtained information, and
coupling the at least one connection based on a second event associated with the first event,
wherein the at least one first end is configured to couple to a power grid.
